# EUROPÄISCHE PATENTSCHRIFT

(11) **EP 1 101 201 B1**
(45) Veröffentlichungstag und Bekanntmachung des Hinweises auf die Patenterteilung: **20.03.2002**
(21) Anmeldenummer: 99966757.9
(22) Anmeldetag: 14.07.1999
(51) Int. Cl.: G07B 15/00

(54) **VERFAHREN UND SYSTEM ZUR ÜBERWACHUNG DES ORDNUNGSGEMÄSSEN BETRIEBS EINES ABBUCHUNGSGERÄTS**
METHOD AND SYSTEM FOR MONITORING THE PROPER OPERATION OF A DEBITING DEVICE
PROCEDE ET SYSTEME POUR CONTROLER SI UN APPAREIL SERVANT A DEBITER UNE SOMME D'ARGENT FONCTIONNE CORRECTEMENT

(30) Priorität: 31.07.1998 DE 19836087
(43) Veröffentlichungstag der Anmeldung: 23.05.2001
(73) Patentinhaber: Vodafone AG, 40213 Düsseldorf (DE)
(72) Erfinder: BARKER, Ronald, D-81379 München (DE); WEBER, Günther, D-81243 München (DE); WOLTERS, Ralf, D-83137 Schonstett (DE)
(74) Vertreter: Meissner, Peter E., Dipl.-Ing.
(86) Internationale Anmeldenummer: DE9902193
(87) Internationale Veröffentlichungsnummer: WO0010132

(56) Entgegenhaltungen:
- DE-A1- 4 310 099
- GB-A- 2 295 476
- US-A- 5 490 079
- US-A- 5 767 505

## Beschreibung

Die Erfindung betrifft ein Verfahren zur Überwachung des ordnungsgemäßen Betriebs eines in einem Fahrzeug angeordneten elektronischen Abbuchungsgeräts für die Nutzung eines Wegstreckennetzes oder das Betreten einer festgelegten geografischen Zone durch das Fahrzeug gemäß dem Oberbegriff des Patentanspruchs 1. Ferner betrifft die Erfindung ein System zur Durchführung dieses Überwachungsverfahrens.

Aus der DE 43 10 099 A1 ist eine elektronische Einrichtung im Sinne eines Abbuchungsgerätes bekannt, das im Rahmen eines Nutzungsabrechnungssystems für die Nutzung eines Wegstreckennetzes oder das Betreten einer festgelegten geografischen Zone durch das Fahrzeug, d.h. für den Aufenthalt in dieser geografischen Zone Buchungen auf einem mobilen Speichermodul vornimmt. Dieses im Fahrzeug mitgeführte mobile Speichermodul ist im Sinne einer Wertkarte wie etwa eine Telefonkarte benutzbar. Das Benutzen der abrechnungspflichtigen.Wegstrecke oder der festgelegten geografischen Zone durch das Fahrzeug kann vom Abbuchungsgerät selbsttätig anhand von Daten erkannt werden, die in einer mitgeführten Speichereinrichtung enthalten sind und für die abrechnungspflichtigen Wegstrecken oder geografischen Zonen identifizierend sind. Diese identifizierenden Daten charakterisieren geografische Positionen und werden vom Abbuchungsgerät verglichen mit der aktuellen geografischen Position des jeweiligen Fahrzeugs. Diese aktuelle Information des Fahrzeugs wird ermittelt anhand von drahtlos im Fahrzeug empfangbaren Daten eines Navigationssatellitensystems. In einer bevorzugten Ausführungsform dieses Abbuchungsgerätes ist es vorgesehen, daß bei ordnungsgemäßem Betrieb des Abbuchungsgerätes von diesem ein "in Ordnung"-Signal aus dem Fahrzeug heraus nach außen sendbar ist. Auf diese Weise soll eine Kontrollmöglichkeit geschaffen werden, um Benutzer des Wegstreckensystems bzw. der geografischen Zone zu ermitteln, die die für die Benutzung vorgeschriebenen Gebühren nicht entrichten wollen und das Abbuchungsgerät beispielsweise nicht einschalten oder aber eine Wertkarte mit einem unzureichenden Gebührenguthaben benutzen.

Für die Einführung eines derartigen elektronischen Nutzungsabrechnungssystems, das weitgehend ohne entlang des Wegstreckennetzes bzw. in den geografischen Zonen fest installierte Infrastruktur auskommen soll, ist es notwendig, daß einerseits eine möglichst zuverlässige Kontrolle zur Ermittlung unberechtigter Nutzungen stattfinden kann, daß aber andererseits gewährleistet ist, daß die datenschutzrechtlichen Bestimmungen nicht verletzt werden. Das bedeutet, daß bei den durchzuführenden Kontrollen im Falle einer nicht zu beanstandenden Nutzung unbedingt die Anonymität des jeweiligen kontrollierten Fahrzeugs und seiner Insassen gewährleistet werden muß.

Um eine Überprüfbarkeit der tatsächlich vorgenommenen Abbuchungen für die Benutzung einzelner Abschnitte eines Wegstreckennetzes (im folgenden sind hiermit sinngemäß auch Nutzungen festgelegter geografischer Zonen gemeint) kann vorgesehen sein, daß in den auf dem mobilen Speichermodul vorgenommenen Buchungen jeweils auch identifizierende Daten des gerade benutzten Abschnitts des Wegstreckennetzes sowie des Zeitpunkts der jeweiligen Benutzung im Sinne einer elektronischen Quittung festgehalten werden. Bei der nachträglichen Kontrolle eines Fahrzeugs könnte anhand der festgehaltenen Daten des Speichermoduls, die beispielsweise für eine gewisse Zeitspanne (z.B. einige Wochen) gespeichert bleiben, nachgewiesen werden, daß das Fahrzeug die jeweils erforderlichen Abbuchungen bei der Benutzung einer bestimmten Wegstrecke tatsächlich vorgenommen hat. Eine solche Kontrollmöglichkeit schließt jedoch gezielte Manipulationen nicht aus. So könnten beispielsweise zwei Fahrer, die sich kennen und zum gleichen Zeitpunkt in getrennten Fahrzeugen die gleiche Strecke durchfahren, sich dahingehend verabreden, daß nur einer der beiden Fahrer sein Abbuchungsgerät ordnungsgemäß betreibt, während der andere Fahrer als "Schwarzfahrer" das Wegstreckennetz benutzt. Wenn nun diese unberechtigte Nutzung dadurch entdeckt wird, daß eine Kontrollstation am Rand einer Wegstrecke auf drahtlosem Wege die Abbuchungsgeräte der passierenden Fahrzeuge auf ihren ordnungsgemäßen Betrieb hin abfragt und das Abbuchungsgerät des "Schwarzfahrers" das angeforderte "in Ordnung"-Signal nicht aussendet, dann kann der Fahrer oder Inhaber dieses Fahrzeugs später zur Rechenschaft gezogen werden. Es wäre ihm dann aber möglich, die elektronische Quittung auf dem mobilen Speichermodul des gleichzeitig mit ihm die Kontrollstation passierenden Fahrzeugs seines "Freundes" vorzulegen. Er könnte sich also mit betrügerischen Mitteln dem rechtsverbindlichen Nachweis seiner unberechtigten Nutzung des Wegstreckennetzes entziehen.

Aus der gattungsbildenden GB 2 295 476 A ist ein in seinen Grundzügen weitgehend mit dem Nutzungsabrechnungssystem gemäß DE 43 10 099 A1 übereinstimmendes Abrechnungssystem bekannt, bei dem die einzelnen Buchungen auf dem als Wertkarte benutzten mobilen Speichermodul unter Aufzeichnung von identifizierenden Daten (geografische Koordinaten) des jeweils vom Fahrzeug benutzten Streckenabschnitts oder der betretenen geografischen Zone zusammen mit dem Zeitpunkt der Benutzung im Sinne einer Quittung für spätere Kontrollzwecke festgehalten werden. Hierzu kann das im jeweiligen Fahrzeug installierte Abbuchungsgerät durch Kontrolleinrichtungen, die z.B. an Autobahnbrücken über der Fahrbahn installiert und jeweils einer Fahrspur fest zugeordnet sind, auf drahtlosem Wege angesprochen werden. Der Zeitpunkt dieses Ansprechens wird sowohl im angesprochenen Abbuchungsgerät als auch in der jeweiligen Kontrolleinrichtung auf einem nichtflüchtigem Speicher aufgezeichnet. Bei einem ordnungsgemäßen Betrieb, der im Abbuchungsgerät selbst durch eine Selbstüberwachung festgestellt wird, erfolgt eine entsprechende Statusmeldung an die Überwachungseinrichtung. Wenn eine solche Statusmeldung, die den ordnungsgemäßen Betrieb signalisiert, unterbleibt, werden von der Kontrolleinrichtung Informationen zur Identifizierung des die Kontrolleinrichtung passierenden Fahrzeugs (z.B: Fotoaufnahme) gespeichert, um eine spätere Kontrolle des Fahrzeugs zur Verfolgung der festgestellten unerlaubten Wegstreckennutzung durchführen zu können.

Aufgabe der vorliegenden Erfindung ist es, ein Verfahren und ein System zur Durchführung des Verfahrens vorzuschlagen, das eine sichere Überwachung des ordnungsgemäßen Betriebs von elektronischen Abbuchungsgeräten im vorstehend beschriebenen Sinne ermöglicht und betrügerische Manipulationen erkennbar macht. Insbesondere soll die Authentizität der abgefragten Statusmeldung des Abbuchungsgeräts mit einem Höchstmaß an Sicherheit gewährleistet sein. Die benutzten Kontrolleinrichtungen sollen flexibel einsetzbar sein, sollen also nicht unbedingt einem Überwachungsort und einem Fahrstreifen dauerhaft fest zugeordnet sein müssen.

Gelöst wird diese Aufgabe bei einem gattungsgemäßen Verfahren durch die kennzeichnenden Merkmale des Patentanspruchs 1. Durch die Merkmale der Unteransprüche 2 bis 5 ist dieses Verfahren in vorteilhafter Weise weiter ausgestaltbar. Ein System zur Durchführung des erfindungsgemäßen Verfahrens weist die im Anspruch 6 gegebenen Merkmale auf. Die Unteransprüche 7 bis 12 beinhalten vorteilhafte Weiterbildungen dieses Systems.

Die Erfindung sieht vor, bei einem gattungsgemäßen Verfahren in den Buchungen auf dem mobilen Speichermodul jeweils auch identifizierende Daten des benutzten Abschnitts des Wegstreckennetzes oder der betretenen geografischen Zone sowie des Zeitpunktes der Benutzung festzuhalten. Auf diese Weise wird auf dem mobilen Speichermodul gleichsam eine elektronische Quittung wie bei einem für eine bestimmte Wegstrecke ausgestellten Fahrschein erzeugt. Darüber hinaus ist vorgesehen, daß das Buchungsgerät durch eine außerhalb des Fahrzeugs angeordnete, also beispielsweise neben einer Straße oder auf einer die jeweilige Straße überquerenden Brücke positionierte Kontrolleinrichtung auf drahtlosem Wege angesprochen wird. Die Kontrolleinrichtung ist ebenso wie das Abbuchungsgerät mit Einrichtungen für den Empfang von Daten des Navigationssatellitensystems ausgestattet, kann also seine geografische Position genau ermitteln. Sobald das Abbuchungsgerät durch die Kontrolleinrichtung angesprochen wird, zeichnet es den Zeitpunkt dieses Ansprechens und die zu diesem Zeitpunkt jeweils empfangenen Daten des Navigationssatellitensystems auf einem nichtflüchtigen Speicher auf. Vorzugsweise handelt es sich dabei um das mobile Speichermodul, auf dem auch die Abbuchungen vorgenommen werden. Ebenso wie das Abbuchungsgerät zeichnet auch die Kontrolleinrichtung den Zeitpunkt des Ansprechens und die zu diesem Zeitpunkt jeweils empfangenen Daten des Navigationssatellitensystems auf einem nichtflüchtigen Speicher auf. Das Abbuchungsgerät ist so eingerichtet, daß es bei ordnungsgemäßem Betrieb aufgrund der Ansprache durch die Kontrolleinrichtung eine entsprechende Statusmeldung, also ein "in Ordnung"-Signal auf drahtlosem Wege an die Kontrolleinrichtung übermittelt. Bei Ausbleiben einer den ordnungsgemäßen Betrieb des Abbuchungsgeräts signalisierenden Statusmeldung werden von der Kontrolleinrichtung Informationen zur Identifizierung des die Kontrolleinrichtung passierenden Fahrzeugs gespeichert. Dabei wird auch festgehalten, an welchem Ort sich das Fahrzeug gerade befand, als es angesprochen wurde. Zweckmäßigerweise erfolgt dies wie bei Radar-Geschwindigkeitskontrollen durch eine entsprechende fotografische Aufnahme des Fahrzeugs. Bei einer späteren Kontrolle der Quittung auf dem mobilen Speichermedium des kontrollierten Fahrzeugs, d.h. des des Schwarzfahrens beschuldigten Fahrers werden die eingetragenen Abbuchungen daraufhin überprüft, ob die in dem nichtflüchtigen Speicher dieses Fahrzeugs aufgezeichneten Daten des Navigationssatellitensystems im Zeitpunkt des Ansprechens durch die Kontrolleinrichtung korrespondieren mit den von der Kontrolleinrichtung selbst für diesen Zeitpunkt aufgezeichneten Daten des Navigationssatellitensystems. Das bedeutet, daß die elektronische Quittung des beschuldigten Fahrers nicht nur einen mit den Aufzeichnungen der Kontrolleinrichtung übereinstimmenden Zeitpunkt enthalten sein muß, sondern daß auch die aufgrund der Daten des Navigationssatellitensystems ermittelbare Position des Fahrzeugs im Kontrollzeitpunkt mit der eigenen Position der Kontrolleinrichtung im Kontrollzeitpunkt korrespondieren muß. Somit ist gewährleistet, daß aufgrund der Positionsdaten beispielsweise eindeutig geklärt werden kann, ob etwa bei einer mehrspurigen Autobahn das kontrollierte Fahrzeug in der ersten, zweiten oder dritten Spur gefahren ist. Wenn etwa ein Fahrzeug aus der zweiten Spur kontrolliert wird und die Quittung eines im gleichen Zeitpunkt passierenden Fahrzeugs aus der ersten oder dritten Spur vorliegt, so kann dies erkannt werden.

Eine solche Kontrolle auf betrügerische Manipulationen ist möglich, obwohl die Genauigkeit der Positionsbestimmung bei Benutzung eines Navigationssatellitensystems (z.B. GPS) üblicherweise nur etwa in einer Größenordnung von 100 m liegt. Diese Genauigkeit ist zeitlichen Variationen unterworfen. Da aber das jeweils kontrollierte Fahrzeug und auch die Kontrolleinrichtung sich nahezu am gleichen Ort befinden und daher ihre Signale auch von denselben Satelliten erhalten, ist der Ermittlungsfehler hinsichtlich Größe und Vorzeichen bei dem kontrollierten Fahrzeug der gleiche wie in der Kontrolleinrichtung. Wenn also die Position der Kontrolleinrichtung im Kontrollzeitpunkt exakt ermittelt und dokumentiert war, dann kann durch die genaue Ermittlung der relativen Lage des kontrollierten Fahrzeugs zur Kontrolleinrichtung auch der genaue geografische Ort des Fahrzeugs zu diesem Zeitpunkt festgestellt werden. Es ist aber auch möglich, die Genauigkeit der Positionsermittlung von vornherein wesentlich zu erhöhen, indem die Positionsermittlung unter Berücksichtigung von Korrekturdaten erfolgt, die die vom Betreiber des Navigationssatellitensystems eingebrachte Variation der Meßsignale zur Begrenzung der Genauigkeit der Positionsbestimmung weitestgehend kompensieren, wie dies bei der DGPS-Positionsermittlung (Differential Global Positioning System) der Fall ist. Die Kontrolleinrichtung kann derartige Korrektursignale von einem entsprechenden Sender empfangen und ebenfalls auf seinem nichtflüchtigen Speicher aufzeichnen. Die auf dem nichtflüchtigen Speicher des kontrollierten Fahrzeugs aufgezeichneten Signale des Navigationssatellitensystems können dann unter Berücksichtigung dieser Korrekturdaten zu einer hochgenauen Positionsbestimmung des Fahrzeugs im Kontrollzeitpunkt herangezogen werden, so daß aufgrund der so bestimmten genauen absoluten Position des Fahrzeugs eindeutig entschieden werden kann, auf welcher Fahrspur sich das jeweilige Fahrzeug gerade befunden hatte.

Die Aufzeichnung der empfangenen Signale des Navigationssatellitensystems anstelle der direkten Aufzeichnung der geografischen Position gewährleistet ein Höchstmaß an Datenauthentizität. Während die geographische Ortsposition bei einer vorher bekannten Lage der Kontrollstelle durch Manipulation gefälscht werden könnte, ist eine solche Fälschung bei den zufällig zustande kommenden Datenkonstellationen der Signale des Navigationssatellitensystems praktisch ausgeschlossen. Ein weiterer wesentlicher Vorteil der Erfindung liegt darin, daß die Kontrolle an ständig wechselnden Orten mit der gleichen Ausrüstung problemlos durchführbar ist.

Es empfiehlt sich, die Kontrolleinrichtung an einer geografischen Position zu betreiben; die in Fahrtrichtung des Fahrzeugs kurz vor dem Ort liegt, an dem bei ordnungsgemäßen Betrieb des Abbuchungsgeräts jeweils die Buchung für den aktuell befahrenen Streckenabschnitt oder das betretene geografische Gebiet erfolgt. Zweckmäßigerweise wird die Kontrolleinrichtung an wechselnden Positionen betrieben, um Fahrern, die in betrügerischer Absicht die Wegstrecken benutzen, die Möglichkeit zu nehmen, sich bereits vorher auf bekannte Kontrollpunkte einzustellen, also das Abbuchungsgerät rechtzeitig wieder in Betrieb zu nehmen und auf unkontrollierten Streckenabschnitten wieder abzuschalten.

Das System zur Durchführung des erfindungsgemäßen Verfahrens ist mit einer Vielzahl von jeweils in Fahrzeugen angeordneten Abbuchungsgeräten ausgestattet, die anhand von in den Abbuchungsgeräten gespeicherten Daten, die für abrechnungspflichtige Wegstrecken oder geografische Zonen identifizierend sind und anhand von drahtlos im Fahrzeug empfangbaren Daten eines Navigationssatellitensystems zur Bestimmung der jeweiligen aktuellen geografischen Fahrzeugposition die Nutzung einer abrechnungspflichtigen Wegstrecke oder einer geografischen Zone selbsttätig erkennen und auf einem im Fahrzeug jeweils mitgeführten mobilen Speichermodul eine entsprechende Buchung vornehmen. Darüber hinaus beinhaltet das System im jeweiligen Fahrzeug eine Einrichtung zur Signalisierung eines ordnungsgemäßen Betriebs des Abbuchungsgeräts. Erfindungsgemäß ist vorgesehen, daß das Abbuchungsgerät jeweils darauf eingerichtet ist, in den Buchungen auf dem mobilen Speichermodul identifizierende Daten des benutzten Abschnitts des Wegstreckennetzes oder der betretenen geografischen Zone sowie des Zeitpunktes der Benutzung im Sinne einer Quittung festzuhalten. Außerhalb der Fahrzeuge ist entlang der abrechnungspflichtigen Wegstrecken oder in den geografischen Zonen mindestens eine Kontrolleinrichtung angeordnet, die ebenso wie das Abbuchungsgerät mit einem Empfänger für die Daten des Navigationssatellitensystems ausgestattet ist. Die Kontrolleinrichtung und das Abbuchungsgerät sind ferner jeweils mit einer Sende- und Empfangseinrichtung ausgestattet, über die das Abbuchungsgerät durch die Kontrolleinrichtung auf drahtlosem Wege ansprechbar ist und über die eine Statusmeldung über den ordnungsgemäßen Betrieb des Abbuchungsgeräts an die Kontrollstation übermittelbar ist. Ein weiteres wesentliches Merkmal des erfindungsgemäßen Systems ist darin zu sehen, daß die Kontrolleinrichtung und das Abbuchungsgerät jeweils darauf eingerichtet sind, den Zeitpunkt des Ansprechens des Abbuchungsgeräts durch die Kontrolleinrichtung und die zu diesem Zeitpunkt empfangenen Daten des Navigationssatellitensystems auf einem nichtflüchtigen Speicher aufzuzeichnen.

Vorzugsweise sind die Sende- und Empfangseinrichtungen des Abbuchungsgeräts und der Kontrolleinrichtung jeweils auf die Übermittlung von Infrarot- oder HF-Signalen eingerichtet. Da die zu überbrückenden Entfernungen im Regelfall unter 100 m liegen, ist nur eine entsprechend geringe Sendeleistung notwendig. Grundsätzlich kann der nichtflüchtige Speicher des Abbuchungsgerätes körperlich von dem mobilen Speichermodul für die Durchführung der Abbuchungen unabhängig sein. Es empfiehlt sich jedoch, für beide Zwecke ein und denselben Speicher, d.h. das mobile Speichermodul zu nutzen. Vorzugsweise handelt es sich dabei um eine Chipkarte. Um im Falle einer mißbräuchlichen Nutzung des Wegstreckennetzes durch ein Fahrzeug gerichtsverwertbare Beweismittel zu sichern, empfiehlt es sich, die Kontrolleinrichtung mit einer Kamera auszurüsten, die automatisch eine das passierende angesprochene Fahrzeug identifizierende Aufnahme macht, wenn dieses Fahrzeug kein Signal zurücksendet, das den ordnungsgemäßen Betrieb des Abbuchungsgeräts bestätigt. Um die absolute Genauigkeit der Positionsbestimmung wesentlich zu erhöhen, empfiehlt es sich, die Kontrolleinrichtung auf den Empfang und die Speicherung von entsprechenden Korrektursignalen einzurichten (z.B. DGPS). In ähnlicher Weise wie dies bei mobilen Radargeräten zur Geschwindigkeitsüberwachung der Fall ist, ist es von Vorteil, die Kontrolleinrichtung als mobile Anlage, insbesondere als selbstfahrende Anlage, auszubilden. Sie kann dann innerhalb kürzester Zeit ihren Standort wechseln, so daß betrügerische Fahrer kaum die Möglichkeit haben, sich frühzeitig auf eine durchgeführte Kontrolle einzustellen.

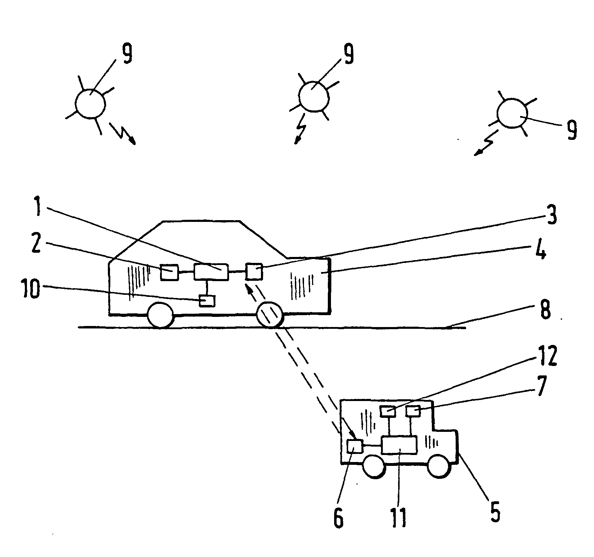

Anhand des in der Figur dargestellten schematischen Ausführungsbeispiels wird die Erfindung nachfolgend näher beschrieben.

Ein Fahrzeug 4, das mit einem erfindungsgemäßen Abbuchungsgerät 1 ausgestattet ist, befährt die Straße 8 eines gebührenpflichtigen Wegstreckennetzes. Mit der Bezugsziffer 9 sind die Satelliten eines Navigationssatellitensystems (z.B. GPS) bezeichnet. Das Abbuchungsgerät 1 umfaßt einen GPS-Empfänger 2 zum Empfang der von dem GPS-Satelliten 9 ausgesandten Signale. Die Abbuchungen für die Wegstreckenbenutzung werden von dem Abbuchungsgerät 1 auf dem mobilen Speichermodul 10 vorgenommen, das zum Beispiel eine Chipkarte ist. Ferner umfaßt das Abbuchungsgerät 1 einen Infrarot-Sender/Empfänger 3. Über diesen Infrarot-Sender/Empfänger 3 kann das Fahrzeug 4 von einer selbstfahrenden Kontrolleinrichtung 5 angesprochen werden, die am Rand der Straße 8 z.B. auf einem kleinen Parkplatz abgestellt ist. Die Kontrolleinrichtung 5 verfügt ihrerseits ebenfalls über einen Infrarot-Sender/Empfänger 6 sowie über einen GPS-Empfänger 7 zum Empfang der Daten der GPS-Satelliten 9. Schließlich beinhaltet die Kontrolleinrichtung 5 auch einen nichtflüchtigen Speicher 11 zur elektronischen Aufzeichnung von Daten. Um zu überprüfen, ob ein passierendes Fahrzeug 4 sein Abbuchungsgerät 1 ordnungsgemäß betreibt, schickt die Kontrolleinrichtung 5 über ihren Infrarot-Sender/Empfänger 6 ein entsprechendes Anfragesignal an den Infrarot-Sender/Empfänger 3 des Fahrzeugs 4. Im Falle des ordnungsgemäßen Betriebs wird ein entsprechendes "in Ordnung"-Signal zurück an den Infrarot-Sender/Empfänger 6 der Kontrolleinrichtung 5 zurückgesendet. In dem Zeitpunkt, in dem die Ansprache des Fahrzeugs 4 durch die Kontrolleinrichtung 5 erfolgt, werden die jeweils empfangenen Signale der GPS-Satelliten 9 sowohl im Fahrzeug 4 als auch in der Kontrolleinrichtung 5 auf einem nichtflüchtigen Speicher aufgezeichnet. Im Fahrzeug 4 erfolgt dies auf dem mobilen Speichermodul 10, auf dem auch die einzelnen Abbuchungen vorgenommen werden. In der Kontrolleinrichtung 5 ist hierzu der nichtflüchtige Speicher 11 vorgesehen. Außer den Signalen der GPS-Satelliten 9 wird auch der genaue Zeitpunkt des Ansprechens (Datum und Uhrzeit) mit aufgezeichnet. Gegebenenfalls werden auch weitere Daten festgehalten, wie etwa die Fahrzeuggeschwindigkeit. Um im Falle einer unberechtigten Nutzung durch ein Fahrzeug 4 eine ausreichende Beweissicherung vornehmen zu können, ist die Kontrolleinrichtung 5 mit einer automatisch arbeitenden Kamera 12 ausgestattet, die im Kontrollzeitpunkt eine identifizierende Aufnahme des Fahrzeugs 4 und seines genauen Aufenthaltortes relativ zur Kontrolleinrichtung 5 anfertigt, wenn kein Signal vom Fahrzeug 4 zurückgesendet wird, das den ordnungsgemäßen Betrieb des Abrechnungsgerätes 1 repräsentiert.

Wenn nun ein des Schwarzfahrens beschuldigter Fahrer später seine auf dem mobilen Speichermodul 10 festgehaltenen elektronischen Quittungen für die von ihm benutzten Wegstrecken vorlegt, kann aufgrund der im Zeitpunkt des Ansprechens durch die Kontrolleinrichtung 5 aufgezeichneten Daten eindeutig ermittelt werden, ob sich genau dieses Fahrzeug an der Position befunden hat, an der die durch die Kamera 12 gemachte identifizierende fotografische Aufnahme des Fahrzeugs gemacht wurde. Eine Manipulation durch Vorlage einer Quittung eines anderen Fahrzeugs, das nahezu im gleichen Zeitpunkt die Kontrollstelle passiert hat, ist auf diese Weise sicher ausschließbar.

## Patentansprüche

1. Verfahren zur Überwachung des ordnungsgemäßen Betriebs eines in einem Fahrzeug angeordneten elektronischen Abbuchungsgeräts, das im Rahmen eines Nutzungsabrechnungssystems für die Nutzung eines Wegstreckennetzes oder das Betreten einer festgelegten geografischen Zone durch das Fahrzeug Buchungen auf einem mobilen Speichermodul vornimmt, wobei das Benutzen der abrechnungspflichtigen Wegstrecke oder geografischen Zone durch das Abbuchungsgerät selbsttätig erkannt wird anhand von in einer mitgeführten Speichereinrichtung enthaltenen Daten, die für die abrechnungspflichtigen Wegstrecken oder geografischen Zonen identifizierend sind, und anhand von drahtlos im Fahrzeug empfangbaren Daten eines Navigationssatellitensystems zur Bestimmung der jeweils aktuellen geografischen Fahrzeugposition und wobei bei ordnungsgemäßem Betrieb des Abbuchungsgeräts ein "in Ordnung"-Signal vom Fahrzeug aussendbar ist, wobei ferner in den Buchungen auf dem mobilen Speichermodul jeweils identifizierende Daten des benutzten Abschnitts des Wegstreckennetzes oder der betretenen geografischen Zone sowie des Zeitpunkts der Benutzung im Sinne einer Quittung festgehalten werden, wobei das Abbuchungsgerät durch eine außerhalb des Fahrzeugs angeordnete Kontrolleinrichtung auf drahtlosem Wege angesprochen wird und daraufhin sowohl in der Kontrolleinrichtung als auch im Abbuchungsgerät der Zeitpunkt des Ansprechens jeweils auf einem nichtflüchtigen Speicher aufgezeichnet werden,
wobei weiterhin das Abbuchungsgerät bei ordnungsgemäßem Betrieb eine entsprechende Statusmeldung auf drahtlosem Weg an die Kontrolleinrichtung übermittelt, und wobei bei Ausbleiben einer den ordnungsgemäßen Betrieb des Abbuchungsgeräts signalisierenden Statusmeldung von der Kontrolleinrichtung Informationen zur Identifizierung des die Kontrolleinrichtung passierenden Fahrzeugs gespeichert und später einer Kontrolle unterzogen werden,
**dadurch gekennzeichnet,**
- **daß** eine Kontrolleinrichtung benutzt wird, die ebenfalls für den Empfang von Daten des Navigationssatellitensystems eingerichtet ist,
- **daß** sowohl in der Kontrolleinrichtung als auch im Abbuchungsgerät außer dem Zeitpunkt des Ansprechens auch die zu diesem Zeitpunkt jeweils empfangenen Daten des Navigationssatellitensystems jeweils auf dem nichtflüchtigen Speicher aufgezeichnet werden,
- und **daß** bei der späteren Kontrolle der auf dem mobilen Speichermedium des kontrollierten Fahrzeugs eingetragenen Abbuchungen überprüft wird, ob die in dem nichtflüchtigen Speicher dieses Fahrzeugs aufgezeichneten Daten des Navigationssatellitensystems im Zeitpunkt des Ansprechens durch die Kontrolleinrichtung korrespondieren mit den von der Kontrolleinrichtung selbst für diesen Zeitpunkt aufgezeichneten Daten des Navigationssatellitensystems.

2. Verfahren nach Anspruch 1,
**dadurch gekennzeichnet,**
**daß** die jeweils im Ansprechzeitpunkt empfangenen Daten des Navigationssatellitensystems im angesprochenen Fahrzeug auf dem mobilen Speichermodul aufgezeichnet werden.

3. Verfahren nach einem der Ansprüche 1 bis 2,
**dadurch gekennzeichnet,**
**daß** die Kontrolleinrichtung an einer geografischen Position betrieben wird, die in Fahrtrichtung des Fahrzeugs kurz vor dem Ort liegt, an dem bei ordnungsgemäßem Betrieb des Abbuchungsgeräts jeweils die Buchung für den aktuell befahrenen Streckenabschnitt oder das betretene geografische Gebiet erfolgt.

4. Verfahren nach einem der Ansprüche 1 bis 3,
**dadurch gekennzeichnet,**
**daß** die Kontrolleinrichtung an wechselnden Positionen betrieben wird.

5. Verfahren nach einem der Ansprüche 1 bis 4,
**dadurch gekennzeichnet,**
**daß** bei der Kontrolle der Abbuchung auf dem mobilen Speichermodul die genaue Ortsposition des kontrollierten Fahrzeugs im Zeitpunkt des Ansprechens durch die Kontrolleinrichtung anhand der aufgezeichneten Daten des Navigationssatellitensystems unter Berücksichtigung von Korrekturdaten ermittelt wird, die die vom Betreiber des Navigationssatellitensystems eingebrachte Variation der Meßsignale zur Begrenzung der Genauigkeit der Positionsbestimmung weitestgehend kompensieren.

6. System zur Durchführung des Verfahrens nach Anspruch 1, mit einer Vielzahl von jeweils in Fahrzeugen (4) angeordneten Abbuchungsgeräten (1), die anhand von in den Abbuchungsgeräten (1) gespeicherten Daten, die für abrechnungspflichtige Wegstrecken (8) oder geografische Zonen identifizierend sind, und anhand von drahtlos im Fahrzeug (4) empfangbaren Daten eines Navigationssatellitensystems (9) zur Bestimmung der jeweiligen aktuellen geografischen Fahrzeugposition die Nutzung einer abrechnungspflichtigen Wegstrecke (8) oder einer geografischen Zone selbsttätig erkennen und auf einem im Fahrzeug (4) jeweils mitgeführten mobilen Speichermodul (10) eine entsprechende Buchung vornehmen, und mit einer Einrichtung im jeweiligen Fahrzeug (4) zur Signalisierung eines ordnungsgemäßen Betriebs des Abbuchungsgeräts (1),
wobei das Abbuchungsgerät (1) jeweils darauf eingerichtet ist, in den Buchungen auf dem mobilen Speichermodul (10) identifizierende Daten des benutzten Abschnitts des Wegstreckennetzes oder der betretenen geografischen Zone sowie des Zeitpunktes der Benutzung im Sinne einer Quittung festzuhalten,
wobei außerhalb der Fahrzeuge entlang der abrechnungspflichtigen Wegstrecken (8) oder in den geografischen Zonen mindestens eine Kontrolleinrichtung (5) angeordnet ist, wobei die Kontrolleinrichtung (5) und das Abbuchungsgerät (1) jeweils mit einer Sende- und Empfangseinrichtung (3, 6) ausgestattet sind, über die das Abbuchungsgerät (1) durch die Kontrolleinrichtung (5) auf drahtlosem Wege ansprechbar ist und über die eine Statusmeldung über den ordnungsgemäßen Betrieb des Abbuchungsgeräts (1) an die Kontrollstation (5) übermittelbar ist und
wobei die Kontrolleinrichtung (5) und das Abbuchungsgerät (1) jeweils darauf eingerichtet sind, den Zeitpunkt eines Ansprechens des Abbuchungsgeräts (1) durch die Kontrolleinrichtung (5) auf einem nichtflüchtigen Speicher (10, 11) aufzuzeichnen,
**dadurch gekennzeichnet,**
- **daß** auch die Kontrolleinrichtung (5) mit einem Empfänger (7) für die Daten des Navigationssatellitensystems (9) ausgestattet ist und
- **daß** die Kontrolleinrichtung (5) und das Abbuchungsgerät (1) jeweils darauf eingerichtet sind, außer dem Zeitpunkt des Ansprechens des Abbuchungsgeräts (1) durch die Kontrolleinrichtung (5) auch die zu diesem Zeitpunkt empfangenen Daten des Navigationssatellitensystems (9) auf dem nichtflüchtigen Speicher (10,11) aufzuzeichnen.

7. System nach Anspruch 6,
**dadurch gekennzeichnet,**
**daß** die Sende- und Empfangseinrichtungen (3, 6) des Abbuchungsgeräts (1) und der Kontrolleinrichtung (5) jeweils auf die Übermittlung von Infrarot- oder HF-Signalen eingerichtet sind.

8. System nach einem der Ansprüche 6 bis 7,
**dadurch gekennzeichnet,**
**daß** der nichtflüchtige Speicher des Abbuchungsgeräts (1) mit dem mobilen Speichermodul (10) identisch ist.

9. System nach einem der Ansprüche 6 bis 8,
**dadurch gekennzeichnet,**
**daß** die Kontrolleinrichtung (5) auf den Empfang und die Speicherung von Korrektursignalen zur Erhöhung der Genauigkeit der Bestimmung der geografischen Position aus den Daten des Navigationssatellitensystems eingerichtet ist.

10. System nach Anspruch 9,
**dadurch gekennzeichnet,**
**daß** die Kontrolleinrichtung (5) als mobile Anlage, insbesondere als selbstfahrende Anlage, ausgebildet ist.

11. System nach einem der Ansprüche 6 bis 10,
**dadurch gekennzeichnet,**
**daß** das mobile Speichermodul (10) als Chipkarte ausgebildet ist.

12. System nach einem der Ansprüche 6 bis 11,
**dadurch gekennzeichnet,**
**daß** die Kontrolleinrichtung (5) mit einer Kamera (12) ausgerüstet ist, die automatisch eine das passierende angesprochene Fahrzeug (4) identifizierende Aufnahme macht, wenn dieses Fahrzeug (4) kein Signal zurücksendet, das einen ordnungsgemäßen Betrieb des Abbuchungsgeräts (1) bestätigt.

## Claims

1. Method for monitoring the proper operation of an electronic debiting device which is disposed in an automotive vehicle and makes entries in a mobile storage module, within the scope of a usage billing system for the use of a stretch of road network or entry to a determined geographical zone by the vehicle, use of the stretch of road or the geographical zone which has to be billed being detected automatically by the debiting device, by means of data contained in an accompanying storage device, said data being used to identify the stretches of road or geographical zones which have to be billed, and by means of data from a satellite navigation system which can be received in the vehicle in a cordless manner in order to determine the respectively current geographical vehicle position and, during proper operation of the debiting device, an "in order" signal being able to be emitted from the vehicle, in addition data identifying the used portion of the stretch of road network or the entered geographical zone and also the time of use being retained in the sense of a receipt in the entries in the mobile storage module, the debiting device being identified in a cordless manner by means of a checking device disposed outwith the vehicle and thereupon, both in the checking device and in the debiting device, the time of identification being recorded respectively in a non-volatile memory, in addition the debiting device transmitting to the checking device in a cordless manner a corresponding status report during proper operation and, upon absence of a status report from the checking device, signalling the proper operation of the debiting device, information being stored for identifying the vehicle passing the checking device and later being subjected to a check,
**characterised in that**
• a checking device is used which is likewise equipped to receive data from the satellite navigation system,
• **in that** both in the checking device and in the debiting device, in addition to the time of identification, also the data from the satellite navigation system received respectively at this time are recorded respectively in the non-volatile memory,
• and **in that**, upon later checking of the debits entered in the mobile storage medium of the checked vehicle, there is an examination of whether the data from the satellite navigation system, which are recorded in the non-volatile memory of this vehicle, correspond at the time of identification by the checking device to the data of the satellite navigation system which are recorded by the checking device itself for this time.

2. Method according to claim 1,
**characterised in that**
the data from the satellite navigation system, which are received respectively at the time of identification, are recorded in the mobile storage module in the vehicle which is identified.

3. Method according to one of the claims 1 to 2,
**characterised in that**
the checking device is operated at a geographical position which is situated, in the direction of travel of the vehicle, a short way in front of the place at which, during proper operation of the debiting device, the entry for the currently travelled portion of road or the entered geographical area is respectively effected.

4. Method according to one of the claims 1 to 3,
**characterised in that**
the checking device is operated at alternating positions.

5. Method according to one of the claims 1 to 4,
**characterised in that**,
upon checking of the debit in the mobile storage module, the precise location of the checked vehicle at the time of identification is detected by the checking device by means of the recorded data from the satellite navigation system taking into account correction data, which compensate as far as possible for the variation in the measured signals which is introduced by the operator of the satellite navigation system and limits the precision of the determination of the position.

6. System for implementing the method according to claim 1,
with a multiplicity of debiting devices (1) which are disposed respectively in vehicles (4) and which, by means of data stored in the debiting devices (1) which identify stretches of road (8) or geographical zones which have to be billed, and by means of data from a satellite navigation system (9), which can be received in a cordless manner in the vehicle (4), in order to determine the respective current geographical position of the vehicle, automatically detect the use of a stretch of road (8) or a geographical zone which have to be billed and make a corresponding entry in a mobile storage module (10) which respectively accompanies the vehicle (4), and with a device in the respective vehicle (4) for signalling a proper operation of the debiting device (1),
the debiting device (1) being respectively equipped to retain data, in the sense of a receipt, identifying the used portion of the stretch of road network or the entered geographical zone and also the time of use in the entries in the mobile storage module (10), at least one checking device (5) being disposed outwith the vehicles along the stretches of road (8) or in the geographical zones which have to be billed, the checking device (5) and the debiting device (1) being equipped respectively with a transmitting and receiving device (3, 6) via which the debiting device (1) can be identified in a cordless manner by the checking device (5) and via which a status report about the proper operation of the debiting device (1) can be transmitted to the checking station (5) and
the checking device (5) and the debiting device (1) being equipped respectively to record the time of identification of the debiting device (1) by the checking device (5) in a non-volatile memory (10, 11),
**characterised in that**
• the checking device (5) is also provided with a receiver (5) for the data from the satellite navigation system (9) and
• **in that** the checking device (5) and the debiting device (1) are respectively equipped to record in the non-volatile memory (10, 11), in addition to the time of identification of the debiting device (1) by the checking device (5), also the data received at this time from the satellite navigation system (9).

7. System according to claim 6,
**characterised in that**
the transmitting and receiving devices (3, 6) of the debiting device (1) and of the checking device (5) are respectively equipped to transmit infra-red or HF signals.

8. System according to one of the claims 6 to 7,
**characterised in that**
the non-volatile memory of the debiting device (1) is identical to the mobile storage module (10).

9. System according to one of the claims 6 to 8,
**characterised in that**
the checking device (5) is equipped to receive and store correction signals in order to increase the precision of the determination of the geographical position from the data from the satellite navigation system.

10. System according to claim 9,
**characterised in that**
the checking device (5) is configured as a mobile unit, in particular as a self-propelled unit.

11. System according to one of the claims 6 to 10,
**characterised in that**
the mobile storage module (10) is configured as a chipcard.

12. System according to one of the claims 6 to 11,
**characterised in that**
the checking device (5) is equipped with a camera (12) which automatically takes a picture identifying the identified passing vehicle (4) if this vehicle (4) does not transmit back a signal which confirms a proper operation of the debiting device (1).

## Revendications

1. Procédé pour surveiller le bon fonctionnement d'un appareil de débit électronique agencé dans un véhicule, qui, dans le cadre d'un système de décompte d'utilisation pour l'utilisation d'un réseau routier ou l'accès d'une zone géographique déterminée par le véhicule, effectue des comptabilisations dans un module de mémoire mobile, l'utilisation d'une zone géographique ou d'un parcours soumis à un décompte étant reconnue automatiquement par l'appareil de débit en référence à des données contenues dans un dispositif de mémoire embarqué, qui permettent l'identification des zones géographiques ou des parcours soumis à des décomptes, et, en référence à des données pouvant être reçues sans fil dans le véhicule d'un système de navigation par satellites pour la détermination de la position géographique à chaque fois actuelle du véhicule, et, lors du bon fonctionnement de l'appareil de débit, un signal "en ordre" pouvant être émis par le véhicule, dans les comptabilisations dans le module de mémoire mobile, à chaque fois, des données d'identification du tronçon utilisé du réseau routier ou de la zone géographique parcourue ainsi que le moment de l'utilisation étant de plus conservées dans le sens d'une quittance, l'appareil de débit étant déclenché par des voies sans fil par un dispositif de contrôle agencé à l'extérieur du véhicule et, de plus, aussi bien dans le dispositif de contrôle qu'également dans l'appareil de débit, le moment de la réponse étant à chaque fois enregistré dans une mémoire non volatile, l'appareil de débit, en bon fonctionnement, transmettant de plus un message de statut correspondant par une voie sans fil au dispositif de commande et, en absence d'un message de statut signalant le bon fonctionnement de l'appareil de débit par le dispositif de contrôle, des informations pour l'identification du véhicule passant le dispositif de contrôle étant mémorisées et soumises ultérieurement à un contrôle,
**caractérisé en ce que** :
- un dispositif de contrôle est utilisé qui est de même adapté pour la réception de données du système de navigation par satellites,
- aussi bien dans le dispositif de contrôle qu'également dans l'appareil de débit, en dehors du moment de la réponse, également les données, reçues à chaque fois à ce moment, du système de navigation par satellites sont enregistrées, à chaque fois, dans la mémoire non volatile, et
- lors du contrôle ultérieur des débits enregistrés sur le support de mémoire mobile du véhicule contrôlé, il est surveillé si les données, enregistrées dans la mémoire non volatile de ce véhicule, du système de navigation par satellites au moment de la réponse par le dispositif de contrôle correspondent aux données, enregistrées par le dispositif de contrôle lui-même pour ce moment, du système de navigation par satellites.

2. Procédé selon la revendication 1,
**caractérisé en ce que** les données, reçues à chaque fois au moment de la réponse, du système de navigation par satellites sont enregistrées dans le véhicule sollicité dans le module de mémoire mobile.

3. Procédé selon une des revendications 1 à 2,
**caractérisé en ce que** le dispositif de contrôle fonctionne en une position géographique qui se trouve, dans la direction de marche du véhicule, peu avant le lieu où, lorsque l'appareil de débit fonctionne correctement, il est à chaque fois effectué la comptabilisation pour le tronçon de trajet actuel parcouru ou la région géographique traversée.

4. Procédé selon une des revendications 1 à 3,
**caractérisé en ce que** le dispositif de contrôle fonctionne en des positions changeantes.

5. Procédé selon une des revendications 1 à 4,
**caractérisé en ce que**, lors du contrôle du débit dans le module de mémoire mobile, la position locale précise du véhicule contrôlé est déterminée au moment de la réponse par le dispositif de contrôle en référence aux données enregistrées du système de navigation par satellites en tenant compte de données de correction, qui compensent très largement la variation, apportée par l'opérateur du système de navigation par satellites, des signaux de mesure pour limiter la précision de la détermination de position.

6. Système pour la mise en oeuvre du procédé selon la revendication 1, comportant une pluralité d'appareils de débit (1) agencés à chaque fois dans des véhicules (4), qui, en référence à des données mémorisées dans les appareils de débit (1), qui peuvent identifier les zones géographiques ou parcours (8) soumis à un décompte, et en référence à des données, pouvant être reçues sans fil dans le véhicule, d'un système de navigation par satellites (9) pour déterminer la position géographique respective actuelle des véhicules, reconnaissent automatiquement l'utilisation d'une zone géographique ou d'un parcours (8) soumis à un décompte et effectuent, dans un module de mémoire mobile (10) embarqué à chaque fois dans le véhicule (4), une comptabilisation correspondante, et un dispositif dans le véhicule respectif (4) pour signaler un bon fonctionnement de l'appareil de débit (1),
l'appareil de débit (1) étant à chaque fois adapté pour conserver dans les comptabilisations des données d'identification dans le module de mémoire mobile (10) du tronçon utilisé du réseau routier ou de la zone géographique traversée, ainsi que le moment de l'utilisation dans le sens d'une quittance,
à l'extérieur des véhicules, le long des parcours (8) soumis à un décompte ou dans les zones géographiques, au moins un dispositif de contrôle (5) étant agencé, le dispositif de contrôle (5) et l'appareil de débit (1) étant à chaque fois équipés de dispositifs d'émission et de réception (3, 6) grâce auxquels l'appareil de débit (1) peut être déclenché par des voies sans fil par le dispositif de contrôle (5) et par lesquels un message de statut sur le bon fonctionnement de l'appareil de débit (1) peut être transmis au poste de contrôle (5), et
le dispositif de contrôle (5) et l'appareil de débit (1) étant à chaque fois adaptés pour enregistrer le moment d'une réponse de l'appareil de débit (1) par le dispositif de contrôle (5) dans une mémoire non volatile (10, 11),
**caractérisé en ce que** :
- également le dispositif de contrôle (5) est équipé d'un récepteur (7) pour les données du système de navigation par satellites (9), et
- le dispositif de contrôle (5) et l'appareil de débit (1) sont adaptés, à chaque fois, pour enregistrer, en dehors du moment de la réponse de l'appareil de débit (1), par le dispositif de contrôle (5), également les données, reçues à ce moment, du système de navigation par satellites (9) dans la mémoire non volatile (10, 11).

7. Système selon la revendication 6,
**caractérisé en ce que** les dispositifs d'émission et de réception (3, 6) de l'appareil de débit (1) et du dispositif de contrôle (5) sont adaptés, à chaque fois, pour la transmission de signaux infrarouges ou HF.

8. Système selon une des revendications 6 à 7,
**caractérisé en ce que** la mémoire non volatile de l'appareil de débit (1) est identique au module de mémoire mobile (10).

9. Système selon une des revendications 6 à 8,
**caractérisé en ce que** le dispositif de contrôle (5) est adapté pour la réception et la mémorisation de signaux de correction pour augmenter la précision de la détermination de la position géographique à partir des données du système de navigation par satellites.

10. Système selon la revendication 9,
**caractérisé en ce que** le dispositif de contrôle (5) est réalisé comme installation mobile, en particulier comme installation automobile.

11. Système selon une des revendications 6 à 10,
**caractérisé en ce que** le module de mémoire mobile (10) est réalisé comme carte à puce.

12. Système selon une des revendications 6 à 11,
**caractérisé en ce que** le dispositif de contrôle (5) est équipé d'une caméra (12) qui réalise automatiquement une prise de vue identifiant le véhicule (4) sollicité qui passe, lorsque ce véhicule (4) ne renvoie aucun signal qui confirme un bon fonctionnement de l'appareil de débit (1).
